# FASCICULE DE BREVET EUROPEEN

(11) **EP 0 695 570 B1**
(45) Date de publication et mention de la délivrance du brevet: **28.11.2001**
(21) Numéro de dépôt: 95401764.6
(22) Date de dépôt: 25.07.1995
(51) Int. Cl.: B01D 19/02, B01D 19/00

(54) **Procédé et dispositif de dégazage sec pour installation de distribution de liquide**
Verfahren und Vorrichtung zur Trockenentgasung für eine Flüssigkeitsverteilungsanlage
Process and apparatus for a dry degassing for a liquid distribution installation

(30) Priorité: 02.08.1994 FR 9409579
(43) Date de publication de la demande: 07.02.1996
(73) Titulaire: BLACKMER MOUVEX, 75012 Paris (FR)
(72) Inventeur: Delaisse, Guy, F-89000 Auxerre (FR)
(74) Mandataire: Breese, Pierre

(56) Documents cités:
- BE-A- 696 824
- DE-A- 3 336 890
- FR-A- 2 243 006
- FR-A- 2 561 130
- FR-A- 2 571 629

## Description

La présente invention concerne un procédé de dégazage sec applicable à une installation de distribution de liquide, destinée notamment à la distribution de combustible domestique. L'invention couvre en outre un dispositif pour la mise en oeuvre du procédé ci-dessus.

On sait que pour la distribution de combustible domestique liquide par exemple, il est impératif de supprimer la majeure partie du gaz, en l'occurrence d'air, dans le liquide, afin de ne pas fausser la mesure de comptage. Les installations de distribution prévoient généralement un dégazeur approprié, mais il arrive que le dégazage s'accompagne d'une émission à l'extérieur d'une mousse du produit, ce qui entraîne d'une part une pollution de l'environnement et, d'autre part, une certaine perte de matière.

Parmi les documents antérieurs, il est possible de citer :

Le document FR-A-2 561 130, qui décrit un procédé et une installation de traitement d'un mélange comprenant un liquide, un gaz et une mousse pour en séparer les constituants individuels. L'installation comprend un séparateur pourvu d'une conduite d'amenée de mélange à séparer, d'une conduite d'une sortie de liquide et des moyens auxiliaires de cassage de la mousse constitués par un cône au-dessus de la zone d'entrée du mélange, dont le sommet comporte une ouverture, qui communique avec une tubulure, dans laquelle la mousse est accélérée et projetée sur la paroi interne du séparateur. Le gaz sort du sommet du séparateur et le liquide séparé est transféré par une conduite vers le fond du séparateur.

Le document FR-A-2 243 006, qui décrit un appareil de destruction de la mousse dans des récipients de réaction, dans lesquels on doit introduire un gaz, comprenant un récipient auxiliaire plus petit que le récipient de réaction, se trouvant au-dessus de et étant raccordé au récipient de réaction par une conduite d'admission latérale et une conduite d'évacuation partant du fond du récipient auxiliaire, et dont le couvercle est traversé par l'axe creux d'une centrifigeuse brise-mousse au-dessus de laquelle une conduite d'évacuation d'air débouche à l'air libre.

La présente invention vise donc à remédier aux inconvénients précités, en fournissant un dispositif et un procédé de dégazage sec du liquide distribué, supprimant l'évacuation extérieure de mousse, le dispositif étant particulièrement compact et de dimensions réduites, ce qui permet son montage sur véhicule de distribution.

Conformément à l'invention, le dispositif de dégazage sec par élimination de mousse dans un circuit de distribution de liquide comprend une enceinte munie d'une entrée de liquide à épurer et d'une sortie de liquide dégazé disposées à des niveaux convenables l'une par rapport à l'autre, ce dispositif étant caractérisé par le fait que ladite enceinte comprend à sa partie supérieure un premier conduit débouchant dans un volume vertical formant clapet sec dont le fond, disposé au-dessus du niveau possible de liquide dans ladite enceinte, est relié à un second conduit débouchant à la partie inférieure de l'enceinte, lesdits conduits étant disposés dans un plan vertical et constituant respectivement la branche d'entrée et la branche de sortie d'une boucle de circulation externe à l'enceinte, tandis que ledit clapet sec comprend un flotteur surmonté d'une tige munie à son extrémité libre d'un obturateur coopérant avec un orifice de mise à l'atmosphère, la longueur de ladite tige étant au moins égale à la colonne de mousse pouvant être produite par le liquide à traiter.

Suivant d'autres caractéristiques :
- un clapet anti-retour est disposé sur la branche de sortie dans le sens interdisant la circulation du liquide à partir de l'enceinte ;
- l'orifice de mise à l'atmosphère est lui-même surmonté d'une cage contenant un double clapet coopérant d'une part avec ledit orifice dans le sens interdisant l'introduction d'air dans le clapet sec et, d'autre part, avec un second orifice ouvert à l'atmosphère, disposé dans le prolongement du premier et destiné à doubler l'effet de l'obturateur porté par la tige du flotteur dans le cas de remplissage du clapet sec par le liquide.

Conformément au procédé d'utilisation du dispositif précité, on prélève en continu de la mousse à partir de l'enceinte et on l'introduit dans le volume vertical que l'on interpose au-dessus du niveau du liquide de l'enceinte dans la branche d'entrée de la boucle de circulation externe que l'on forme dans un plan vertical par rapport à ladite enceinte et qui comprend la branche de sortie, on fait décanter dans ledit volume le liquide compris dans la mousse et l'on effectue la mise à l'atmosphère du gaz ainsi séparé, on détecte le niveau du liquide ainsi décanté, on coupe la mise à l'atmosphère lorsque le niveau détecté du liquide ainsi décanté atteint une valeur prédéterminée ne permettant pas le logement dans ledit volume de la colonne de mousse produite par le liquide traité et l'on réintroduit dans l'enceinte le liquide décanté, par la branche de sortie de ladite boucle, moyennant quoi on libère la mise à l'atmosphère et l'on continue à prélever la mousse à partir de l'enceinte.

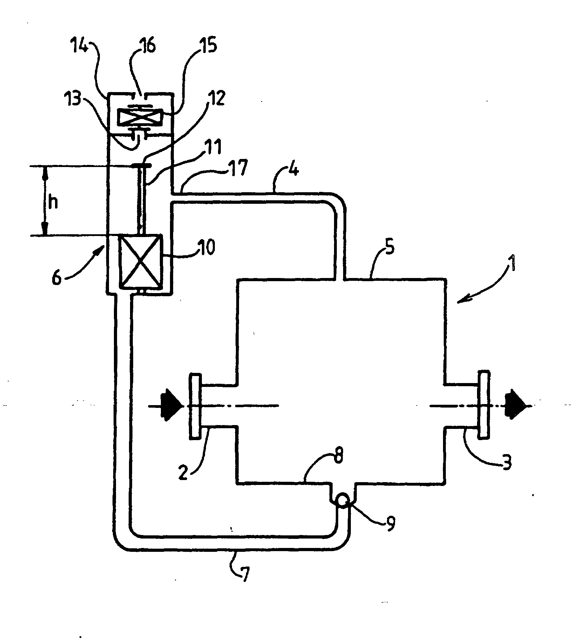

D'autres caractéristiques et avantages de l'invention ressortiront mieux de la description qui va suivre d'une forme possible de réalisation, faite en regard de la figure unique du dessin annexé, qui représente une vue schématique d'un dispositif de dégazage illustrant et mettant en oeuvre le procédé selon l'invention.

En se référant au dessin, une enceinte de référence générale 1 est comprise dans un circuit de distribution de liquide devant être exempt de gaz, par exemple du combustible domestique, l'installation (non représentée) étant montée sur un camion. De façon connue en soi, l'enceinte 1 peut être constituée par un dégazeur muni en outre d'un filtre convenable et comportant une entrée 2 de liquide à épurer et une sortie 3 de liquide totalement dégazé, l'entrée 2 et la sortie 3 pouvant être disposées à un niveau différent l'une par rapport à l'autre. Un premier conduit 4 est disposé sur la partie supérieure 5 de l'enceinte et il est relié à un volume vertical de référence générale 6 formant clapet sec, qui sera mieux décrit ci-après. Le fond de ce volume 6 est relié à un second conduit 7, débouchant dans la partie inférieure 8 de l'enceinte 1. Comme mentionné plus haut, le premier conduit 4 et le second conduit 7 avec le volume 6 interposé, sont disposés dans un plan vertical et forment respectivement la branche d'entrée et la branche de sortie d'une boucle de circulation externe. Avantageusement, le conduit 7 débouche dans l'enceinte 1 par l'intermédiaire d'un clapet anti-retour 9 de tout type approprié et destiné à interdire la circulation dans ledit conduit à partir de l'enceinte. Le volume 6 constituant le clapet sec contient un flotteur 10 surmonté d'une tige 11 munie à son extrémité libre d'un obturateur 12 pouvant coopérer avec un orifice 13 de mise à l'atmosphère. Une cage 14 est avantageusement disposée au-dessus de l'orifice 13 et contient un double clapet 15 pouvant coopérer d'une part avec ledit orifice 13 et, d'autre part, avec un second orifice 16 de sortie à l'atmosphère disposé dans le prolongement du premier orifice. Conformément à l'invention, la tige 11 présente une longueur h au moins égale à la colonne de mousse pouvant être produite par le liquide, en fonction de ses propriétés et des caractéristiques de l'installation. De même, l'entrée 17 du volume 6 est avantageusement disposée au-dessus du flotteur 10.

Le mélange produit-gaz pénètre dans l'enceinte 1 (appelée ci-après dégazeur dans un but de simplification) par l'entrée 2 et ressort par la sortie 3 quand le dégazage est terminé. On effectue le dégazage par l'intermédiaire du conduit 4 dans le clapet sec 6. Les gaz et mousses pénétrant dans le clapet sec 6 se séparent : les mousses descendent tandis que le liquide décante et les gaz s'évacuent par l'orifice 13, d'abord en contournant le double clapet 15 et enfin par l'orifice 16 de sortie à l'atmosphère. Les condensats remplissent progressivement le conduit 7 et le bas du clapet sec 6 jusqu'à soulever le flotteur 10 qui obstrue, lorsque le niveau est suffisant, l'orifice 13 par l'intermédiaire de l'obturateur 12.

A ce moment, si des gaz arrivent de nouveau dans le dégazeur 1 le niveau de liquide diminue et, par effet de vases communicants, le liquide contenu dans le clapet sec 6 s'évacue par le conduit 7 puis au travers du clapet anti-retour 9 vers le dégazeur 1.

La baisse de niveau dans le clapet sec 6 entraîne l'ouverture de l'orifice 13 par l'abaissement du flotteur 10 et donc le redémarrage du cycle de dégazage.

Il y a lieu de noter que le clapet 15 a deux fonctions, à savoir :
- en cas de dépression dans le dégazeur 1 il empêche l'entrée d'air dans le clapet sec par obstruction de l'orifice 13 du côté opposé au flotteur 10 ;
- en cas de manque d'étanchéité de ce même orifice lorsque tout le dispositif est amené à être plein de liquide il assure une double sécurité en obturant l'orifice 16.

Comme déjà indiqué, le clapet anti-retour 9 interdit le remplissage du clapet sec 6 par la branche 7.

Conformément à l'invention, l'agencement du dispositif permet d'éviter le passage à contre-courant classique des gaz qui montent et du liquide décanté qui descend, ce qui favorise la création de mousse. En effet, dans ce dispositif le gaz et les condensats entrent dans le clapet sec 6 à un niveau supérieur au niveau maximum du liquide décanté et du liquide pouvant être contenu dans l'enceinte ou le dégazeur 1. Par ailleurs, afin de favoriser la circulation externe dans la boucle, on donne à la branche d'entrée 4 une section inférieure à celle de la branche de sortie 7 afin de créer une perte de charge dans ladite branche d'entrée 4.

Il est bien entendu que la présente invention n'a été décrite et représentée qu'à titre explicatif mais nullement limitatif et qu'on pourra y apporter toute modification utile, notamment dans le domaine des équivalences techniques, sans sortir de son cadre.

## Revendications

1. Dispositif de dégazage sec par élimination de mousse dans un circuit de distribution de liquide, le dispositif comprenant une enceinte (1), un volume vertical formant clapet sec (6) et deux conduits (4,7), ladite enceinte étant munie d'une entrée (2) de liquide à épurer et d'une sortie (3) de liquide dégazé disposées à des niveaux convenables l'une par rapport à l'autre, ladite enceinte comprenant à sa partie supérieure le premier conduit (4) débouchant dans le volume vertical formant clapet sec (6) dont le fond, disposé au-dessus du niveau possible de liquide dans ladite enceinte, est relié au second conduit (7) débouchant à la partie inférieure (8) de l'enceinte, lesdits conduits étant disposés dans un plan vertical et constituant respectivement la branche d'entrée et la branche de sortie d'une boucle de circulation externe à l'enceinte, ledit clapet sec comprenant un flotteur (10) surmonté d'une tige (11) munie à son extrémité libre d'un obturateur (12) coopérant avec un orifice (13) de mise à l'atmosphère, la longueur de ladite tige étant au moins égale à la colonne de mousse pouvant être produite par le liquide à traiter.

2. Dispositif selon la revendication 1, **caractérisé par le fait qu'**un clapet anti-retour (9) est disposé sur la branche de sortie (7) dans le sens interdisant la circulation du liquide à partir de l'enceinte.

3. Dispositif selon l'une des revendications 1 ou 2, **caractérisé par le fait que** l'orifice (13) de mise à l'atmosphère est lui-même surmonté d'une cage (14) contenant un double clapet (15) coopérant d'une part avec ledit orifice dans le sens interdisant l'introduction d'air dans le clapet sec et, d'autre part, avec un second orifice (16) ouvert à l'atmosphère, disposé dans le prolongement du premier et destiné à doubler l'effet de l'obturateur porté par la tige (11) du flotteur dans le cas de remplissage du clapet sec par le liquide.

4. Dispositif selon l'une quelconque des revendication 1 à 3, **caractérisé par le fait que** la branche d'entrée (4) présente une section inférieure à celle de la branche de sortie (7).

5. Dispositif selon l'une quelconque des revendications 1 à 4, **caractérisé par le fait que** l'enceinte (1) avec ses entrée (2) et sortie (3) associées sont constituées par un dégazeur.

6. Procédé d'utilisation du dispositif selon l'une quelconque des revendications 1 à 5, dans lequel l'on prélève en continu de la mousse à partir de l'enceinte (1) et on l'introduit dans le volume vertical (6) que l'on interpose au-dessus du niveau du liquide de l'enceinte dans la branche d'entrée (4) de la boucle de circulation externe que l'on forme dans un plan vertical par rapport à ladite enceinte et qui comprend la branche de sortie (7), on fait décanter dans ledit volume le liquide compris dans la mousse et l'on effectue la mise à l'atmosphère du gaz ainsi séparé, on détecte le niveau du liquide ainsi décanté, on coupe la mise à l'atmosphère (13,16) lorsque le niveau détecté du liquide ainsi décanté atteint une valeur prédéterminée ne permettant pas le logement dans ledit volume de la colonne de mousse produite par le liquide traité et l'on réintroduit dans l'enceinte le liquide décanté, par la branche de sortie (7) de ladite boucle, moyennant quoi on libère la mise à l'atmosphère et l'on continue à prélever la mousse à partir de l'enceinte.

## Patentansprüche

1. Vorrichtung zur Trockenentgasung durch Schaumentfernung in einem Flüssigkeitsverteilerkreis, wobei die Vorrichtung eine Kammer (1), ein senkrechtes, ein Trockenventil (6) bildendes Volumen und zwei Leitungsrohre (4, 7) umfasst, wobei die Kammer mit einem Eingang (2) für die zu bereinigende Flüssigkeit und einem Ausgang (3) für die entgaste Flüssigkeit versehen ist, die auf geeigneten Höhen zu einander angeordnet sind, wobei die Kammer an ihrem Oberteil das erste Leitungsrohr (4) umfasst, das in das senkrechte Volumen einmündet, das ein Trockenventil (6) bildet, dessen über dem möglichen Flüssigkeitspegel in der Kammer angeordneter Boden mit dem zweiten Leitungsrohr (7) verbunden ist, das in den unteren Teil (8) der Kammer einmündet, wobei die Leitungsrohre in einer senkrechten Ebene angeordnet sind und jeweils den Eingangsabschnitt und den Ausgangsabschnitt eines Kreislaufs außerhalb der Kammer bilden, wobei das Trockenventil einen Schwimmer (10) umfasst, den eine Stange (11) überragt, die an ihrem freien Ende mit einem Verschluss (12) versehen ist, der mit einer Entlüftungsöffnung (13) zusammenwirkt, wobei die Stangenlänge mindestens der Schaumkolonne entspricht, die von der zu behandelnden Flüssigkeit erzeugt werden kann.

2. Vorrichtung nach Anspruch 1, **dadurch gekennzeichnet, dass** ein Sperrventil (9) auf dem Ausgangsabschnitt (7) in der den Umlauf der Flüssigkeit von der Kammer aus untersagenden Richtung angeordnet ist.

3. Vorrichtung nach einem der Ansprüche 1 oder 2, **dadurch gekennzeichnet, dass** die Entlüftungsöffnung (13) ihrerseits von einem Behältnis (14) überragt wird, das ein Doppelventil (15) enthält, das einerseits mit der Öffnung in der die Lufteinführung in das Trockenventil untersagenden Richtung und andererseits mit einer zweiten entlüftenden Öffnung (16), die in der Verlängerung der ersten Öffnung angeordnet ist und die Wirkung des von der Schwimmerstange (11) getragenen Verschlusses verdoppeln soll, wenn das Trockenventil sich mit der Flüssigkeit füllt, zusammenwirkt.

4. Vorrichtung nach einem der Ansprüche 1 bis 3, **dadurch gekennzeichnet, dass** der Eingangsabschnitt (4) einen kleineren Querschnitt als der Ausgangsabschnitt (7) aufweist.

5. Vorrichtung nach einem der Ansprüche 1 bis 4, **dadurch gekennzeichnet, dass** die Kammer (1) mit ihrem dazugehörigen Eingang (2) und Ausgang (3) aus einem Entgaser besteht.

6. Verfahren zur Verwendung der Vorrichtung nach einem der Ansprüche 1 bis 5, wobei fortlaufend Schaum aus der Kammer (1) entnommen und in das senkrechte Volumen (6) eingeführt wird, das über dem Flüssigkeitspegel der Kammer im Eingangsabschnitt (4) des externen Kreislaufs eingefügt ist, der in einer zur Kammer senkrechten Ebene gebildet wird und den Ausgangsabschnitt (7) umfasst, wobei die im Schaum enthaltene Flüssigkeit in das Volumen abgeschieden und die Entlüftung des derart getrennten Gases durchgeführt wird, der Pegel der so abgeschiedenen Flüssigkeit erfasst wird, die Entlüftung (13, 16) abgeschaltet wird, wenn der erfasste Pegel der so abgeschiedenen Flüssigkeit einen vorgegebenen Wert erreicht, der die Aufnahme der von der behandelten Flüssigkeit erzeugten Schaumkolonne in dem Volumen nicht ermöglicht, und wobei man die abgeschiedene Flüssigkeit über den Ausgangsabschnitt (7) des Kreislaufs wieder in die Kammer zurückführt, wodurch die Entlüftung freigegeben wird und man weiterhin den Schaum aus der Kammer entnimmt.

## Claims

1. Device for dry degassing by elimination of foam from a distribution circuit for liquid, the device comprising a chamber (1), a vertical volume forming a dry valve (6) and two pipes (4, 7), said chamber being provided with an inlet (2) for liquid to be cleaned and an outlet (3) for degassed liquid set at suitable levels relative to each other, said chamber comprising at its upper part the first pipe (4) opening into the vertical volume forming a dry valve (6) whose base, set above the possible level of liquid in said chamber, is linked to the second pipe (7) opening at the lower part (8) of the chamber, said pipes being arranged in a vertical plane and constituting respectively the inlet branch and the outlet branch of a circulation loop external to the chamber, said dry valve comprising a floater (10) surmounted by a rod (11) provided at its free end with a closure (12) co-operating with an atmospheric pressure port (13), the length of said rod being at least equal to the column of foam able to be produced by the liquid to be treated.

2. Device according to claim 1, **characterised in that** a non-return valve (9) is set on the outlet branch (7) in the direction preventing the circulation of the liquid from the chamber.

3. Device according to one or the other of claims 1 or 2, **characterised in that** the atmospheric pressure port (13) is itself surmounted by a cage (14) containing a double valve (15) co-operating on the one hand with said port in the direction preventing the introduction of air into the dry valve and, on the other hand, with a second port (16) open to the atmosphere, set along the prolongation of the first and intended to double the effect of the closure carried by the rod (11) of the floater in the case where the dry valve is filled with the liquid.

4. Device according to any one of claims 1 to 3, **characterised in that** the inlet branch (4) has a crosssection which is smaller than that of the outlet branch (7).

5. Device according to any one of claims 1 to 4, **characterised in that** the chamber (1) together with its associated inlet (2) and outlet (3) are constituted by a degasser.

6. Method of use of the device according to any one of claims 1 to 5, in which the foam is extracted continuously from the chamber (1) and is introduced into the vertical column (6) which is interposed above the level of the liquid in the chamber in the inlet branch (4) of the external circulation loop which is formed in a vertical plane relative to said chamber and which comprises the outlet branch (7), the liquid comprised in the foam being allowed to settle in said volume and the gas thus separated being vented at atmospheric pressure, the level of the liquid thus settled is detected, the atmospheric pressure port (13, 16) is closed when the detected level of the liquid thus settled reaches a predetermined value which does not allow space in said volume of the column of foam produced by the treated liquid and the settled liquid is reintroduced into the chamber, through the outlet branch (7) of said loop, whilst the atmospheric pressure port is opened and extraction of the foam from the chamber is continued.
